Europäisches Patentamt

(19) European Patent Office

Office européen des brevets

(11) Veröffentlichungsnummer: **0 065 198
B1**

(12) **EUROPÄISCHE PATENTSCHRIFT**

(45) Veröffentlichungstag der Patentschrift:
05.12.84

(21) Anmeldenummer: 82103843.7

(22) Anmeldetag: 05.05.82

(51) Int. Cl.³: **C 08 J 5/04,** C 08 L 67/02,
C 08 K 7/14

(54) Verfahren zur Herstellung von Formmassen aus glasfaserverstärkten gesättigten Polyestern.

(30) Priorität: 14.05.81 DE 3119139

(43) Veröffentlichungstag der Anmeldung:
24.11.82 Patentblatt 82/47

(45) Bekanntmachung des Hinweises auf die Patenterteilung:
05.12.84 Patentblatt 84/49

(84) Benannte Vertragsstaaten:
BE CH DE FR GB IT LI NL

(56) Entgegenhaltungen:
DE - A - 2 349 396
DE - A - 2 627 869

Die Akte enthält technische Angaben, die nach dem
Eingang der Anmeldung eingereicht wurden und die
nicht in dieser Patentschrift enthalten sind.

(73) Patentinhaber: BASF Aktiengesellschaft,
Carl-Bosch-Strasse 38, D-6700 Ludwigshafen (DE)

(72) Erfinder: Seiler, Erhard, Dr., Erpolzheimer Strasse 1,
D-6700 Ludwigshafen (DE)
Erfinder: Moskob, Klaus, Koenigsberger Strasse 10,
D-6700 Ludwigshafen (DE)
Erfinder: Gutsche, Herbert, Koenigsberger Strasse 4,
D-6711 Beindersheim (DE)
Erfinder: Theysohn, Rainer, Dr., Am Bruch 38,
D-6710 Frankenthal (DE)

ACTORUM AG

## Beschreibung

Die Erfindung betrifft ein Verfahren zur Herstellung von Formmassen aus glasfaserverstärkten gesättigten Polyestern durch Einarbeiten von Glasfasern in den Polyester.

Bekanntlich kann die Festigkeit und Zähigkeit von gesättigten Polyestern durch den Zusatz von Glasfasern erheblich verbessert werden (s. z.B. DE-AS Nr. 2042447). Dabei werden üblicherweise Polyestergranulat und geschnittene Glasfasern oder Endlosglasfasern *(rovings)* gemeinsam in den Einzugsteil eines Extruders eingegeben. Dies ist die sogenannte *cold feed*-Arbeitsweise. Schnittglasfasern haben im allgemeinen eine Länge von etwa 1 bis 10 mm. Es ist bekannt, dass durch die Scherkräfte des Extruders die Glasfasern auf Längen weit unterhalb von 500 μm zerbrochen werden (s. z.B. US-PS Nr. 4164563). Die dabei resultierende mittlere Länge der Fasern ist offenbar um so geringer, je höher der Glasfasergehalt ist.

Es hat sich nun gezeigt, dass verschiedene Eigenschaften der Polyesterformmassen von der Länge der Glasfasern abhängen. Nur mit kurzen Fasern, z.B. in der Grössenordnung um 100 bis 150 μm, erhält man Formmassen, die bei der Spritzgussverarbeitung verzugsarme Formteile mit glatter Oberfläche ergeben. Bei wesentlich längeren Fasern sind diese Vorteile nicht mehr gegeben.

Andererseits ist aber mit der *cold feed*-Arbeitsweise als schwerwiegender Nachteil ein hoher Verschleiss der Maschinenteile verbunden, der von einer Schädigung durch die harten Glasfasern herrührt, und natürlich um so stärker ist, je höher der Fasergehalt ist. Senkt man aber den Fasergehalt zu weit ab, so leiden die mechanischen Eigenschaften der Formkörper.

Eine alternative Arbeitsweise, die ebenfalls bekannt ist („Kunststoffe", Bd. 49 [1959], S. 545/46), besteht darin, die Glasfasern in den Extruder an einer Stelle zuzugeben, an der das Polymere als Schmelze vorliegt (*hot feed*-Arbeitsweise). Dabei ist die Schädigung der Maschinenteile durch die Glasfasern wesentlich geringer, da die Polymerschmelze als Umhüllung für die Glasfasern wirkt. Andererseits ist das Ausmass der Zerkleinerung der Glasfasern durch die Scherwirkung der Extruderschnecken aber viel geringer als bei der *cold feed*-Arbeitsweise, so dass Spritzgussteile, die aus derart erhaltenen Polyesterformmassen hergestellt werden, stark zum Verzug neigen und eine rauhe Oberfläche aufweisen. Bei niedrigen Fasergehalten und niedrigviskosen Polyestern resultieren aufgrund der geringen Scherwirkung besonders lange Glasfasern, was dann störend ist, wenn zur Verringerung des Verzugs niedrige Glasfasergehalte angestrebt werden.

Der Erfindung lag nun die Aufgabe zugrunde, ein Verfahren zum Einarbeiten von Glasfasern in Polyester zu entwickeln, das die Vorteile der *cold feed*- und der *hot feed*-Arbeitsweise in sich vereint.

Es wurde gefunden, dass diese Aufgabe gelöst wird, wenn man 6,66 bis 30% der eingesetzten Glasfasermenge zusammen mit teilchenförmigem Polyester dem Extruder zuführt und 93,34 bis 70% der Glasfasermenge in den Extruder an einer Stelle zugibt, an der der Polyester als Schmelze vorliegt.

Es war zu erwarten, dass hierbei die Schädigung der Maschinenteile durch die Glasfasern wesentlich geringer ist als bei der reinen *cold feed*-Arbeitsweise; es war aber ausserordentlich überraschend, dass die mittlere Glasfaserlänge auf Werte abgesenkt wird, die weit unter denen liegt, die bei der reinen *hot feed*-Arbeitsweise erhalten werden, und dies auch dann, wenn man niedrige Glasfasergehalte und niedrige Polyesterviskositäten hat. Das hat zur Folge, dass bei der Spritzgussverarbeitung der erfindungsgemäss hergestellten Formmassen verzugsarme Formteile mit glatter Oberfläche erhalten werden, die sich gut entformen lassen. Gleichzeitig weisen diese Formteile gute mechanische Eigenschaften auf.

Nach dem erfindungsgemässen Verfahren können alle bekannten gesättigten Homo- und Copolyester verarbeitet werden. Bevorzugt sind Polyethylenterephthalat und insbesondere Polybutylenterephthalat, vorzugsweise solches mit K-Werten zwischen 50 und 70. Die Polyester werden in Teilchenform eingesetzt, vorzugsweise als Granulat.

Die Formmassen sollen 15 bis 50 Gew.-% Glasfasern enthalten. Die verwendeten Glasfasern können aus E-, A- oder C-Glas sein. Sie sind vorzugsweise mit einer Schlichte und einem Haftvermittler ausgerüstet. Ihr Durchmesser liegt im allgemeinen zwischen 6 und 20 μm. Es können sowohl Endlosfasern *(rovings)* als auch Schnittglasfasern mit einer Länge von 1 bis 10, vorzugsweise 3 bis 6 mm, eingesetzt werden. Besonders bevorzugt ist eine Arbeitsweise, bei der zusammen mit dem Polyestergranulat Schnittglasfasern in den Extruder zugeführt und in die Polyesterschmelze Endlosglasfasern zugegeben werden. Eine weitere bevorzugte Ausführungsform besteht darin, dass zusammen mit dem Polyestergranulat gemahlene Glasfasern mit einer mittleren Faserlänge von 0,1 bis 1 mm zugeführt und in die Polyesterschmelze Endlosglasfasern zugegeben werden.

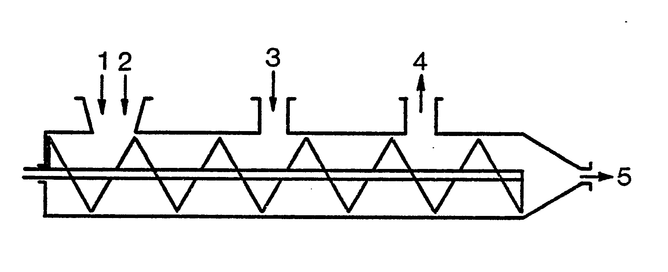

Das erfindungsgemässe Verfahren wird auf handelsüblichen Ein- oder vorzugsweise Zweiwellenextrudern durchgeführt. In der beigefügten Zeichnung ist ein solcher Extruder schematisch dargestellt. In den Einzugtrichter werden Polyestergranulat 1 und Schnittglasfasern 2 zugeführt; bei 3 werden Endlosglasfasern zugegeben und treffen im Extruder auf bereits aufgeschmolzenen Polyester. Bei 4 werden flüchtige Bestandteile entgast und bei 5 wird die Formmasse ausgepresst.

Die Extrusion erfolgt bei Massetemperaturen oberhalb der Schmelztemperatur des Polymeren. Polybutylenterephthalat wird vorzugsweise bei Temperaturen zwischen 240 und 300° C; Polyethylenterephthalat bei 250 bis 310° C extrudiert.

In einer weiteren bevorzugten Ausführungsform der Erfindung wird bei der Extrusion 0,05 bis 5, vorzugsweise 0,3 bis 1 Gew.-%, bezogen auf den Polyester, eines Verarbeitungshilfsmittels zugegeben, zweckmässigerweise zusammen mit dem Polyestergranulat. Als Verarbeitungshilfsmittel kommen vorzugsweise Ester langkettiger Fettsäuren, z.B. Pentaerythrittetrastearat oder Glycerintristearat in Frage. Durch den Zusatz von Verarbeitungshilfsmitteln wird die Entformbarkeit und die Oberfläche von Spritzgussteilen verbessert. Es hat sich überraschenderweise gezeigt, dass bei dem erfindungsgemässen Verfahren die Neigung der Spritzgussteile zum Verzug durch die Anwesenheit der Verarbeitungshilfsmittel lange nicht in dem Mass erhöht wird, wie dies beim reinen *hot feed*-Verfahren der Fall ist.

Ausser den Glasfasern und Verarbeitungshilfsmitteln können bei der Extrusion noch andere übliche Zusatzstoffe zugegeben werden, wie z.B. Füllstoffe, Pigmente, Stabilisatoren, Flammschutzmittel.

Die beiden, aus dem Extruder austretenden Stränge werden nach üblichen Methoden granuliert. Aus dem erhaltenen Granulat können nach bekannten Spritzgussverfahren Formteile hergestellt werden, die hervorragende mechanische Eigenschaften und eine glatte Oberfläche haben und praktisch verzugsfrei sind.

Die in den Beispielen genannten Teile und Prozente beziehen sich auf das Gewicht.

*Beispiel 1:*

Zusammensetzung (Bestandteile):

83 Teile Polybutylenterephthalat mit K-Wert (nach Fikentscher, 1%ig in Phenol/o-Dichlorbenzol 60:40, 23° C) 68

0,7 Teile Verarbeitungshilfsmittel Pentaerithrittetrastearat

1,3 Teile Graupigmente als 40%iger Polyethylenfarbbatch

15 Teile Glasfasern

a) 1 Teil Glasfasern wird als 6-mm-Schnittglas zusammen mit dem Polybutylenterephthalatgranulat, dem Verarbeitungshilfsmittel und dem Farbpigmentkonzentrat in Granulatform in einen Zweiwellenextruder vom Typ ZBK 53 Werner und Pfleiderer in die Zone 1/2 zugeführt. Durch Scherung und Gehäusebeheizung von 270° C schmilzt das PBTP-Granulat auf und die Glasfasern werden zerkleinert. Bei Zone 3 des Extruders werden 14 Teile Glasfasern als endloser *roving*-Strang in die glasfaserhaltige PBTP-Schmelze eingeführt und ebenfalls zerkleinert. In Zone 4 wird die Schmelze entgast und bei 5 als Strang ausgepresst und granuliert.

b) Es wird unter a verfahren mit dem Unterschied, dass 2,5 Teile Schnittglas mit dem Polyestergranulat und den Zuschlägen in Zone 1/2 des Extruders eingebracht werden und 12,5 Gew.-Teile Glasfasern als endloser *roving*-Strang bei Zone 3 des Extruders in die PBTP-Schmelze eingezogen werden.

c) Es wird wie unter a verfahren mit dem Unterschied, dass 4 Teile Schnittglasfasern mit dem Polyestergranulat und den Zuschlägen in Zone 1/2 des Extruders eingebracht werden und 11 Teile Glasfasern als endloser *roving*-Strang bei Zone 3 in die Polyesterschmelze eingezogen werden.

d) Nicht erfindungsgemäss (Vergleichsbeispiel): Sämtliche 15 Teile Glasfasern werden als Schnittglas zusammen mit dem Polyestergranulat und den Zuschlägen in Zone 1/2 des Extruders eingebracht.

e) Nicht erfindungsgemäss (Vergleichsbeispiel): In Zone 1/2 werden nur Polyestergranulat und Zuschläge eingebracht. Sämtliche 15 Teile Glasfasern werden als endloser *roving*-Strang bei Zone 3 des Extruders in die Schmelze eingezogen.

Das aus den Versuchen a bis e erhaltene glasfasergefüllte Polyestergranulat wird in einer Spritzgussmaschine Aarburg Allrounder 300 aufgeschmolzen und über einen Filmanguss zu 1 mm dünnen Platten mit den Abmessungen 100 × 100 mm verarbeitet. Aus diesen Platten werden visuell der Verzug (Wölbung und Verdrillung) und die Fertigteiloberfläche untersucht.

Weiterhin werden am Granulat durch Veraschen der Gesamtglasfasergehalt sowie die mittlere Glasfaserlänge durch Ausmessen in einem Teilchenzählgerät (Zeiss TGZ 3) bestimmt.

Weiterhin werden durch Verarbeiten auf der Spritzgussmaschine (Aarburg Allrounder 300) Probekörper zur Bestimmung der mechanischen Eigenschaften hergestellt. Folgende mechanische Eigenschaften werden gemessen.

Reissfestigkeit nach DIN 53 455
Biegefestigkeit nach DIN 53 452
Zug-E-Modul nach DIN 53 455
Schlagzähigkeit nach DIN 53 453
Brucharbeit (Fallbolzentest) nach DIN 53 443/1

Die Ergebnisse der Prüfungen sind in Tabelle 1 zusammengestellt.

*(Tabelle auf der nächsten Seite)*

Die erfindungsgemäss hergestellten Produkte zeichnen sich durch besonders ausgewogene mechanische, verarbeitungstechnische und anwendungstechnische Eigenschaften aus. Besonders überraschend war, mit welch geringen Anteilen Glasfasern, nach dem *cold feed*-Prinzip mit dem Polyestergranulat zudosiert, die günstigen Eigenschaften erhalten wurden.

*Beispiel 2:*

Zusammensetzung (Bestandteile):

68 Teile Polybutylenterephthalat K-Wert 68
0,7 Teile Pentaerithrittetrastearat
1,3 Teile Graupigmente
30 Teile Glasfasern

a) Es wird wie in Beispiel 1a verfahren mit dem Unterschied, dass 2 Teile Glasfasern mit dem Polyestergranulat in Zone 1/2 des Extruders eingebracht werden und 28 Teile Glasfasern als *roving* in Zone 3 in die Polymerschmelze eingezogen werden.

b) Es wird wie unter 1a beschrieben verfahren mit dem Unterschied, dass 5 Teile Glasfasern mit dem Polyestergranulat und 25 Teile als *roving* in die Polymerschmelze eingebracht werden.

c) 7,5 Teile Glasfasern werden mit dem Polyestergranulat und 22,5 Teile Glasfasern werden als *roving* in die Schmelze eingebracht.

*Tabelle 1*

| Beispiel | Teile GF Zone 1/2 | Teile GF Zone 3 | Glüh-rück-stand (Gew.-%) | Verzug an Platten | Oberfläche | mittlere GF-Länge (µm) | Reiss-festigkeit (N/mm²) | Biege-festigkeit (N/mm²) | Zug-E-Modul (N/mm²) | Schlag-zähig-keit (kJ/m²) | Bruch-arbeit ($W_{50}$) (Nm) | Zyklus-zeit relativ | Verschleiss a) bei Kon-fektion b) bei Verar-beitung |
|---|---|---|---|---|---|---|---|---|---|---|---|---|---|
| 1a (erfin-dungsgemäss) | 1 | 14 | 15,2 | schwach gekrümmt, nicht verdrillt | glatt und glänzend | 240 | 96 | 160 | 5900 | 35 | 3,5 | 90 = 10% kürzer | a) sehr gering b) gering |
| 1b (erfin-dungsgemäss) | 2,5 | 12,5 | 14,8 | kaum gekrümmt, nicht verdrillt | glatt und glänzend | 180 | 92 | 155 | 5600 | 32 | 4,5 | 80 = 20% kürzer | a) sehr gering b) sehr gering |
| 1c (erfin-dungsgemäss) | 4 | 11 | 15 | nicht gekrümmt, nicht verdrillt | glatt und glänzend | 130 | 81 | 141 | 5400 | 30 | 6 | 80 = 20% kürzer | a) gering b) sehr gering |
| 1d (Vergleich) | 15 | — | 14,6 | nicht gekrümmt, nicht verdrillt | glatt und glänzend, aber Farbver-tiefung | 105 | 55 | 105 | 3300 | 19 | 2,5 | 80 = 20% kürzer | a) sehr hoch b) sehr gering |
| 1e (Vergleich) | — | 15 | 15,2 | stark gekrümmt und verdrillt | Glasfaser-markierung etwas fleckig | 338 | 101 | 170 | 6200 | 32 | 3,5 | 100 | a) sehr gering b) hoch |

d) Vergleichsbeispiel nicht erfindungsgemäss. Alle 30 Teile Glasfasern werden mit dem Poly-estergranulat eingebracht.

e) Alle 30 Teile Glasfasern werden als *roving*-Strang in die Polymerschmelze eingebracht.

Die Prüfung und Verarbeitung erfolgt wie in Beispiel 1 beschrieben. Die Ergebnisse in Tabelle 2 zeigen analog wie in Beispiel 1 besonders ausge-wogene Eigenschaften für die erfindungsgemäss hergestellten Produkte.

*Tabelle 2*

| Beispiel | Teile GF Zone 1/2 | Teile GF Zone 3 | Glüh-rück-stand (Gew.-%) | Verzug an Platten | Oberfläche | mittlere GF-Länge (µm) | Reiss-festigkeit (N/mm²) | Biege-festigkeit (N/mm²) | Zug-E-Modul (N/mm²) | Schlag-zähig-keit (kJ/m²) | Bruch-arbeit ($W_{50}$) (Nm) | Zyklus-zeit relativ | Verschleiss a) bei Kon-fektion b) bei Verar-beitung |
|---|---|---|---|---|---|---|---|---|---|---|---|---|---|
| 2a (erfin-dungsgemäss) | 2 | 28 | 31 | schwach gekrümmt, nicht verdrillt | glatt und glänzend | 190 | 122 | 217 | 10 500 | 40 | 3 | 90 | a) gering b) gering |
| 2b (erfin-dungsgemäss) | 5 | 25 | 31,6 | kaum gekrümmt, nicht verdrillt | glatt und glänzend | 140 | 110 | 203 | 10 100 | 37 | 4,5 | 80 | a) gering b) sehr gering |
| 2c (erfin-dungsgemäss) | 7,5 | 22,5 | 30,6 | nicht gekrümmt, nicht verdrillt | glatt und glänzend | 120 | 105 | 195 | 9 500 | 35 | 6 | 80 | a) gering b) sehr gering |
| 2d (Vergleich) | 30 | — | 29 | nicht gekrümmt, nicht verdrillt | glatt und glänzend, Farbver-änderung | 95 | 70 | 130 | 7 500 | 25 | 4,5 | 80 | a) sehr hoch b) sehr gering |
| 2e (Vergleich) | — | 30 | 31,2 | stark gekrümmt und verdrillt | starke GF-Markierung, fleckig | 270 | 129 | 225 | 11 000 | 42 | 1,5 | 100 | a) gering b) hoch |

## Patentansprüche

1. Verfahren zur Herstellung von Formmassen aus gesättigten Polyestern, die mit 15 bis 50 Gew.-% (bezogen auf die Formmassen) Glasfasern verstärkt sind, durch Einarbeiten der Glasfasern in den Polyester auf einem Extruder, dadurch gekennzeichnet, dass 6,66 bis 30% der eingesetzten Glasfasermenge zusammen mit teilchenförmigem Polyester dem Extruder zugeführt wird und 93,34 bis 70% der Glasfasermenge in den Extruder an einer Stelle zugegeben wird, an der der Polyester als Schmelze vorliegt.

2. Verfahren nach Anspruch 1, dadurch gekennzeichnet, dass zusätzlich 0,05 bis 5 Gew.-%, bezogen auf den Polyester, eines Verarbeitungshilfsmittels zugegeben wird.

3. Verfahren nach Anspruch 1, dadurch gekennzeichnet, dass als Polyester Polybutylenterephthalat mit einem K-Wert (nach Fikentscher) zwischen 50 und 70 verwendet wird.

4. Verfahren nach Anspruch 1, dadurch gekennzeichnet, dass zusammen mit dem Polyester Schnittglasfasern einer Länge von 1 bis 10 mm in den Extruder zugeführt werden, und in die Polyesterschmelze Endlosglasfasern zugegeben werden.

## Claims

1. A process for the production of moulding compositions from saturated polyesters, which are reinforced with from 15 to 50% by weight, based on the moulding composition, of glass fibres, by incorporating the glass fibres into the polyester in an extruder, wherein from 6.66 to 30% of the amount of glass fibres used is fed into the extruder together with particulate polyester, and 93.34 to 70% of the amount of glass fibres is supplied to the extruder at a point where the polyester is in the form of a melt.

2. A process as claimed in Claim 1, wherein from 0.05 to 5% by weight, based on the polyester, of a processing aid is additionally added.

3. A process as claimed in Claim 1, wherein polybutylene terephthalate having a K value (according to Fikentscher) of from 50 to 70 is used as polyester.

4. A process as claimed in Claim 1, wherein chopped glass fibres having a length of from 1 to 10 mm are fed into the extruder together with the polyester, and glass filaments are introduced into the polyester melt.

## Revendications

1. Procédé de préparation de matières à mouler à base de polyesters saturés, renforcés avec 15 à 50% en poids (rapportés à la matière à mouler) de fibres de verre, par incorporation des fibres de verre dans le polyester sur une extrudeuse, caractérisé par le fait que l'on introduit dans l'extrudeuse 6,66 à 30% de la quantité de fibres de verre utilisée avec du polyester particulaire, et que 93,34 à 70% de la quantité de fibres de verre est rajoutée dans l'extrudeuse en un point où le polyester est sous forme de masse fondue.

2. Procédé selon la revendication 1, caractérisé par le fait que l'on ajoute en plus 0,05 à 5% en poids, rapportés au polyester, d'un auxiliaire de traitement.

3. Procédé selon la revendication 1, caractérisé par le fait qu'on utilise, comme polyester, du poly(téréphtalate de butylène) d'un indice K (selon Fikentscher) compris entre 50 et 70.

4. Procédé selon la revendication 1, caractérisé par le fait qu'on introduit dans l'extrudeuse, en même temps que le polyester, des fibres de verre coupées, d'une longueur de 1 à 10 mm, et qu'on ajoute, dans la masse fondue de polyester, des fibres de verre continues.